# EUROPÄISCHE PATENTSCHRIFT

(11) **EP 1 932 017 B1**
(45) Veröffentlichungstag und Bekanntmachung des Hinweises auf die Patenterteilung: **16.05.2012**
(21) Anmeldenummer: 06806876.6
(22) Anmeldetag: 28.09.2006
(51) Int. Cl.: G01S 7/487, G01S 7/497, G01S 17/10, G01S 17/89

(54) **VORRICHTUNG UND VERFAHREN ZUR AUFNAHME VON ABSTANDSBILDERN**
DEVICE AND METHOD FOR RECORDING DISTANCE IMAGES
PROCEDE ET DISPOSITIF DE PRISE DE VUE DE DISTANCES

(30) Priorität: 30.09.2005 DE 102005046950
(43) Veröffentlichungstag der Anmeldung: 18.06.2008
(73) Patentinhaber: Odos imaging Ltd, Edinburgh EH9 3JF (GB)
(72) Erfinder: MENGEL, Peter, 82223 Eichenau (DE); FISCHER, Marc, 88149 Nonnenhorn (DE); LISTL, Ludwig, 81739 München (DE)
(74) Vertreter: Fischer, Ernst
(86) Internationale Anmeldenummer: PCT/EP2006/066855
(87) Internationale Veröffentlichungsnummer: WO 2007/036557

(56) Entgegenhaltungen:
- WO-A2-03/016944
- DE-A1- 19 833 207
- US-A- 4 722 599
- MENGEL P ET AL: "Fast range imaging by CMOS sensor array through multiple double short time integration (MDSI)" PROCEEDINGS 2001 INTERNATIONAL CONFERENCE ON IMAGE PROCESSING. ICIP 2001. THESSALONIKI, GREECE, OCT. 7 - 10, 2001, INTERNATIONAL CONFERENCE ON IMAGE PROCESSING, NEW YORK, NY : IEEE, US, Bd. VOL. 1 OF 3. CONF. 8, 7. Oktober 2001 (2001-10-07), Seiten 169-172, XP010563724 ISBN: 0-7803-6725-1

## Beschreibung

Die Erfindung betrifft eine Vorrichtung zur Aufnahme von Abstandbildern mit einer Lichtpulse aussendenden Lichtquelle und einem Lichtempfänger, der den an einem Objektbereich zugeworfenen Lichtstrom eines Lichtpulses über ein Zeitfenster, dessen Zeitabstand zum Aussendevorgang eines Lichtpulses variierbar ist, zu einer Vielzahl von Lichtmengenwerte integriert, und mit einer dem Lichtempfänger nachgeschalteten Auswerteeinheit, die anhand der von den Lichtmengenwerte gebildeten Korrelationsfunktion den Abstand des Objektbereichs ermittelt.

Die Erfindung betrifft ferner ein Verfahren zur Aufnahme von Abstandsbildern, bei dem mit Hilfe einer Lichtlaufmessvorrichtung mit Kurzzeitintegration eine Korrelationsfunktion zwischen einem an einem Objektbereich zurückgeworfenen Lichtpuls und einem Zeitfenster der Lichtlaufzeitmessvorrichtung bestimmt wird.

Eine derartige Vorrichtung und derartiges Verfahren sind aus der WO 03/016944 A2 bekannt. Bei der bekannten Vorrichtung und dem bekannten Verfahren werden Lichtpulse von einer Lichtquelle zu einer Objektoberfläche gesendet und dort zurückgeworfen. Das an der Objektoberfläche zurückgeworfene Licht gelangt zu einem in CMOS-Technik hergestellten Bildwandler, der eine Vielzahl von Lichtempfängern aufweist, in denen der einfallende Lichtstrom Ladungsträger erzeugen kann, wenn der Lichtempfänger aktiviert ist. Die Lichtempfänger können während eines variierbaren Zeitfensters aktiviert werden. Die am Ende des Zeitfensters im Lichtempfänger vorhandene Ladungsmenge ist ein Maß für die Lichtmenge, die während des Zeitfensters vom Lichtempfänger erfasst worden ist. Durch den Lichtempfänger wird daher der einfallende Lichtstrom während des Zeitfensters integriert.

Durch Variation des Zeitabstands zwischen dem Aussendevorgang des Lichtpulses und des zur Integration verwendeten Zeitfensters kann eine Korrelationsfunktion zwischen dem Lichtpuls und dem Zeitfenster bestimmt werden. Wenn die Dauer der Lichtpulse gleich der Dauer des Zeitfensters ist, weist die Korrelationsfunktion ein ausgeprägtes Maximum auf. Das Maximum der Korrelationsfunktion liegt bei einem Zeitwert, der der Lichtlaufzeit des Lichtpulses von der Lichtquelle zum Lichtempfänger entspricht. Daher kann aus dem Maximum der Korrelationsfunktion unmittelbar die Lichtlaufzeit bestimmt werden. Aus der Lichtlaufzeit kann dann der Abstand zwischen Objektoberfläche und Vorrichtung berechnet werden.

Die bekannte Vorrichtung und das bekannte Verfahren können im Bereich der Automobiltechnik, der Navigation oder der Gebäude-, Sicherheits- und Automatisierungstechnik verwendet werden.

Ein Nachteil der bekannten Vorrichtung und des bekannten Verfahrens ist, dass teilverdeckt liegende Objekte, zum Beispiel ein Fahrzeug hinter einem Zaun oder einem Gebüsch, nicht richtig erkannt werden. Ebenso können Staub oder sonstige Verschmutzungen auf der Optik zu Fehlmessungen führen. Denn bei dem bekannten Verfahren und der bekannten Vorrichtung wird bei teilverdeckt liegenden Objekten ein mittlerer Abstandswert angezeigt, der sich aus der Mittelung verschiedener Entfernungswerte ergibt.

In US 4 722 599 A ist ein Wolkenhöhenmesser beschrieben, in welchem die Ausgangssignale eines Lichtempfängers in einem Zeitfenster integriert werden, wobei das Zeitfenster relativ zu den ausgesendeten Lichtpulsen schrittweise verschoben wird. Ein Mikroprozessor des Wolkenhöhenmessers bildet eine geglättete Funktion aus den Signalen, leitet die Funktion ab und berechnet Maxima und Minima.

Ausgehend von diesem Stand der Technik liegt der Erfindung daher die Aufgabe zugrunde, eine Vorrichtung und ein Verfahren zur Aufnahme von Abstandsbildern zu schaffen, die mehrzielfähig sind.

Diese Aufgabe wird durch eine Vorrichtung und ein Verfahren mit den Merkmalen der unabhängigen Ansprüche gelöst. In den davon abhängigen Ansprüchen sind vorteilhafte Ausgestaltungen und Weiterbildungen angegeben.

Bei der Vorrichtung und dem Verfahren werden Extremwerte der Steigung in der Korrelationsfunktion bestimmt und daraus die Abstände von unterschiedlich entfernten Objektbereichen ermittelt. Denn Lichtpulse, die an unterschiedlich entfernten Objektbereichen reflektiert werden, treffen verzögert am jeweiligen Lichtempfänger ein. Sie tragen daher nur dann zum Lichtmengensignal bei, wenn der jeweilige Lichtpuls im jeweils verwendetem Zeitfenster liegt. Ein stufenförmiges Ansteigen der Korrelationsfunktion kann daher auf das Erfassen zusätzlicher Lichtpulse zurückgeführt werden. Aus den Steigungsmaxima kann dann die Lichtlaufzeit der an unterschiedlichen Objektbereichen zurückgeworfenen Lichtpulse bestimmt werden. Insofern sind die Vorrichtung und das Verfahren mehrzielfähig.

Bei einer bevorzugten Ausführungsform wird die Dauer der von der Lichtquelle ausgesandten Lichtpulse kleiner gleich der Lichtlaufzeit für einen aufzulösenden Entfernungsunterschied gewählt. Unter der Dauer der Lichtpulse soll dabei die Halbwertsdauer der Lichtpulse verstanden werden. Bei dieser Dauer der Lichtpulse ist es möglich, den gewünschten Entfernungsabstand aufzulösen.

Weiterhin werden die Steigungsmaxima vorzugsweise anhand einer Ableitungsfunktion der Korrelationsfunktion bestimmt. In diesem Fall kann die Bestimmung der Steigungsmaxima auf eine Suche von lokalen Extremwerten zurückgeführt werden.

Die Steigungsfunktion wird vorzugsweise bestimmt, indem die Differenz zwischen zwei Lichtmengenwerten bestimmt wird, die einen Zeitabstand im Bereich der Pulsdauer aufweisen. Dadurch wird die für eine Berechnung einer Ableitungsfunktion typische Anfälligkeit gegenüber Störungen und Rauschen reduziert.

Die von einem Lichtempfänger aufgenommenen Lichtmengenwerte können in einem Zwischenspeicher zwischengespeichert werden. Die Berechnung der Ableitung kann dann anhand der im Zwischenspeicher gespeicherten Lichtmengenwerte erfolgen. Bei einer derartigen Ausführungsform können sämtliche Lichtempfänger auf unterschiedliche Objektbereiche gerichtet sein und damit zur vollen räumlichen Auflösung beitragen.

Bei einer weiteren abgewandelten Ausführungsform werden jeweils zwei benachbarte Lichtempfänger mit versetzten Zeitfenstern betrieben und jeweils der Differenzwert ausgelesen. Diese Ausführungsform bietet den Vorteil, dass die Variation der Lichtpulse keinen Einfluss auf das Differenzsignal hat. Außerdem wird das für in CMOS-Technik hergestellte Lichtempfänger typische Reset-Rauschen weitgehend eliminiert.

Gemäß der Erfindung wird die zusätzliche Ortsinformation dazu verwendet, die räumliche Auflösung des Abstandsbildes zu erhöhen. Bei unbekannten Objekten können dazu die Abstandswerte der benachbarten Bildelemente des Abstandsbildes herangezogen werden, indem Teilbereichen eines Bildelements entsprechend den Abstandswerten der benachbarten Bildelemente unterschiedliche Abstandswerte zugewiesen werden.

Bei bekannten Objekten kann das Abstandsbild durch Anpassung an das bekannte Objekt erzeugt werden. Dies ist insbesondere bei Überwachungsaufgaben vorteilhaft, wenn sich in Bewegung befindende bekannte Objekte detektiert werden sollen und die zu detektierenden Objekte durch andere Strukturen teilweise verdeckt sind.

Weitere Vorteile und Eigenschaften der Erfindung gehen aus der nachfolgenden Beschreibung hervor, in der Ausführungsbeispiele der Erfindung im Einzelnen anhand der beigefügten Zeichnung erläutert werden. Es zeigen:
- Figur 1: eine Ansicht einer Vorrichtung zur Erzeugung von Abstandsbildern;
- Figur 2: zeitliche Diagramme der Lichtpulse, der zur Integration verwendeten Zeitfenster und der zurückge- worfenen Lichtpulse einschließlich der vom Sensor erfassten Anteile sowie eine Darstellung einer Korrelationsfunktion;
- Figur 3: Zeitdiagramme mit dem ausgesendeten Lichtpuls,zwei zurückgeworfenen Lichtpulsen und einem Integrationsfenster, das einen der beiden zurückgeworfenen Lichtpulse erfasst;
- Figur 4: Zeitdiagramme entsprechend Figur 3, bei denen das Integrationsfenster den zweiten zurückgeworfenen Lichtpuls zumindest teilweise erfasst;
- Figur 5: Zeitdiagrammen entsprechend Figur 3, bei denen das Integrationsfenster beide Lichtpulse erfasst;
- Figur 6: eine Darstellung einer Korrelationsfunktion bei Vorliegen von zwei zurückgeworfenen Lichtpulsen;
- Figur 7: die Ableitung der Korrelationsfunktion aus Figur 6;
- Figur 8: ein Blockschaltbild einer Vorrichtung zur Aufnahme von Abstandsbildern;
- Figur 9: ein Blockschaltbild einer weiteren Vorrichtung zur Aufnahme von Abstandsbildern; und
- Figur 10: eine Darstellung der Verwendung der zusätzlichen Abstandsinformation zur Erhöhung der Auflösung.

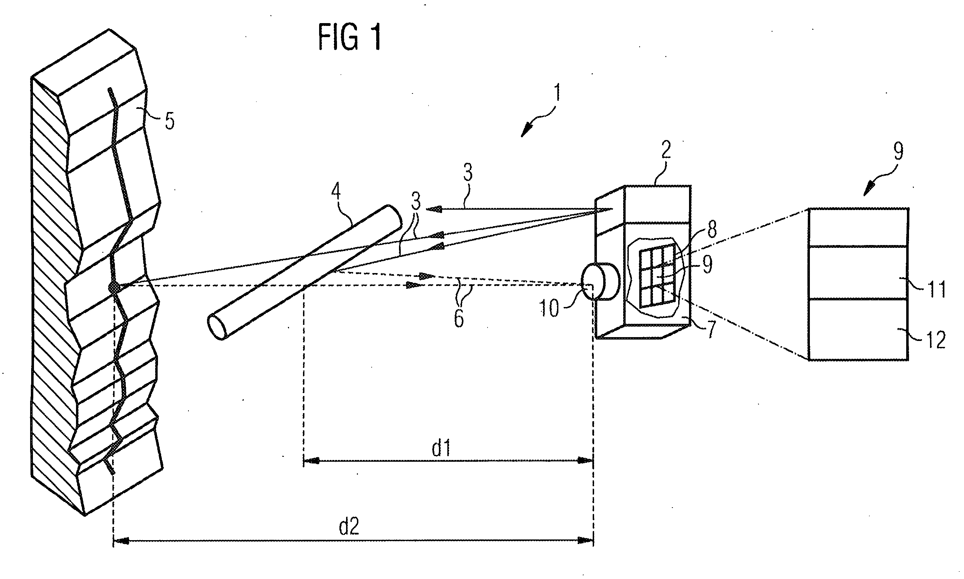

Figur 1 zeigt eine Aufnahmevorrichtung 1 für Abstandsbilder. Die Aufnahmevorrichtung 1 umfasst eine Laserlichtquelle 2, die Lichtpulse 3 auf ein Vordergrundobjekt 4 und ein Hintergrundobjekt 5 sendet. Die vom Vordergrundobjekt 4 und vom Hintergrundobjekt 5 zurückgeworfenen Lichtpulse 6 werden von einer Kamera 7 erfasst, die einen in CMOS-Technik gefertigten Lichtsensor 8 mit einer Vielzahl von Sensorelementen 9 umfasst.

Es sei angemerkt, dass die zurückgeworfenen Lichtpulse 6 sowohl zurückreflektiert als auch zurückgestreut werden können.

Das Vordergrundobjekt 4 befindet sich in dem Abstand d1 zur Kamera 7, während sich das Hintergrundobjekt 5 in einem Abstand d2 zur Kamera 7 befindet. Durch eine Optik 10 der Kamera 7 werden das Vordergrundobjekt 4 und das Hintergrundobjekt 5 auf die Sensorelemente 9 abgebildet. Aufgrund der geringen räumlichen Auflösung des Lichtsensors 8 deckt ein Bild des Vordergrundobjekts 4 lediglich ein Teilbereich des Sensorelements 9 ab. Der Rest des Sensorelements 9 wird von einem Bild 12 des Hintergrundobjekts 5 eingenommen. Das betreffende Sensorelement 9 empfängt daher sowohl Lichtpulse, die vom Vordergrundobjekt 4, als auch Lichtpulse, die vom Hintergrundobjekt 5 zurückgeworfen worden sind. Bei einem betreffenden Sensorelement 9 treffen daher um unterschiedliche Zeitspannen verzögerte Lichtpulse 6 ein.

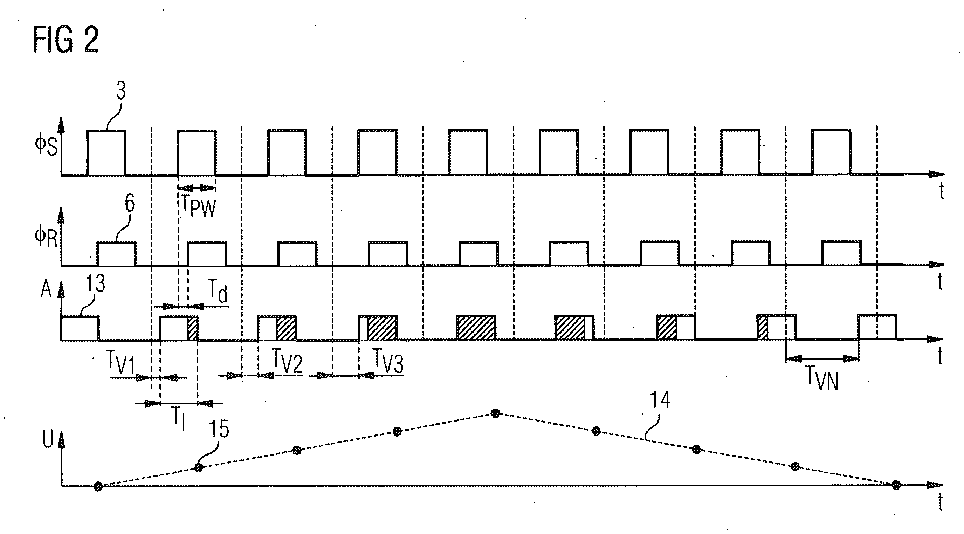

In Figur 2 sind in Zeitdiagrammen eine Folge von der Laserlichtquelle 2 ausgesandten Lichtpulsen 3, von zurückgeworfenen Lichtpulsen 6 und eine Folge von Integrationsfenstern 13 sowie eine sich aus der Messung ergebende Korrelationsfunktion 14 dargestellt.

In dem die Lichtpulse 3 enthaltenen Zeitdiagramms sind jeweils die Lichtströme Φ_{S} dargestellt. In dem die zurückgeworfenen Lichtpulse 6 enthaltenen Zeitdiagramm sind die Lichtströme Φ_{R} der zurückgeworfenen Lichtpulse 6 dargestellt. Die zurück geworfenen Lichtpulse 6 sind entsprechend der für den Weg zum Objekt und zurück zur Kamera 7 benötigten Zeit um eine Zeitspanne T_{d} verzögert.

Die Sensorelemente 9 sind für die Dauer der Integrationsfenster 13 aktiviert. Die Integrationsfenstern 13 weisen eine Zeitdauer T_{I} auf' und sind in den einzelnen Messvorgängen jeweils eine Zeitspanne T_{V0} bis T_{VN} verschoben. Die Integration des Lichtstroms des zurück geworfenen Lichtpulses 6 findet nur innerhalb der Integrationsfenster 13 statt. Dabei wird die Lichtmenge Q der zurückgeworfenen Lichtpulse 6 bestimmt, die im Integrationsfenster 13 auf das jeweilige Sensorelement 9 trifft. Die Lichtmengenwerte 15 sind proportional der aus den Sensorelementen ausgelesenen Ladungsmenge oder Spannung U. Die so bestimmten Lichtmengenwerte 15 bilden eine Korrelationskurve 14. Da der Lichtmengenwert 15 maximal ist, wenn der zurückgeworfene Lichtpuls 6 vollständig in das Integrationsfenster 13 fällt, kann beispielsweise aus dem Maximum der Korrelationskurve 14 die laufzeitbedingte Verzögerung T_{d} des Lichtpulses bestimmt werden. Dies setzt allerdings voraus, dass die Integrationsdauer T_{I} des Integrationsfensters 13 in etwa gleich der Pulsdauer T_{PW} des Lichtpulses 3 ist.

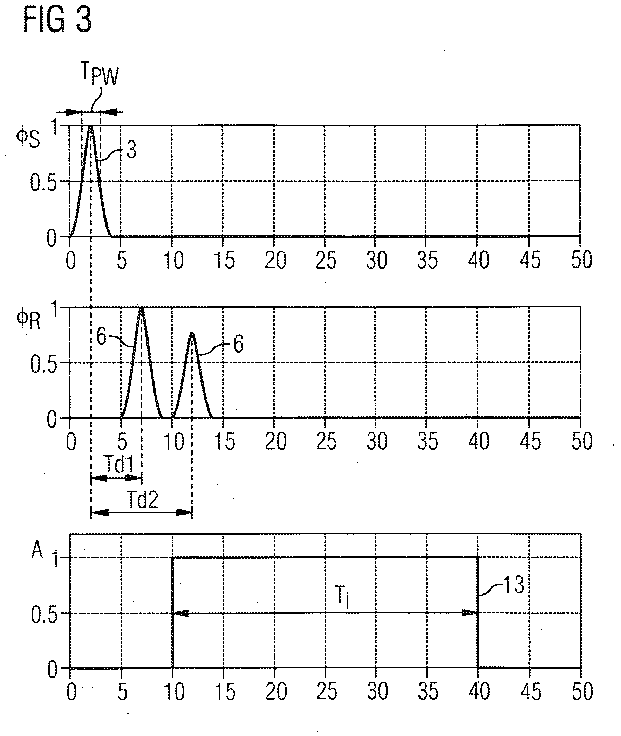

In Figur 3 ist nun die Situation dargestellt, dass der ausgesandte Lichtpuls 3 zum einen am Vordergrundobjekt 4 und zum anderen am Hintergrundobjekt 5 zurückgeworfen wird. Auf das Sensorelement 9 treffen daher zwei zeitversetzte Lichtpulse 6 auf. In Figur 3 wird nur der zweite, am Hintergrundobjekt 5 zurückgeworfene Lichtpuls 6 vom Sensorelement 9 erfasst, da zum Zeitpunkt des Eintreffens des am Hintergrundobjekt 5 reflektierten Lichtpulses 6 das betreffende Sensorelement 9 aktiviert ist. Die in Figur 3 dargestellten Zeitdiagramme betreffen die Verzögerungszeit T_{V5}.

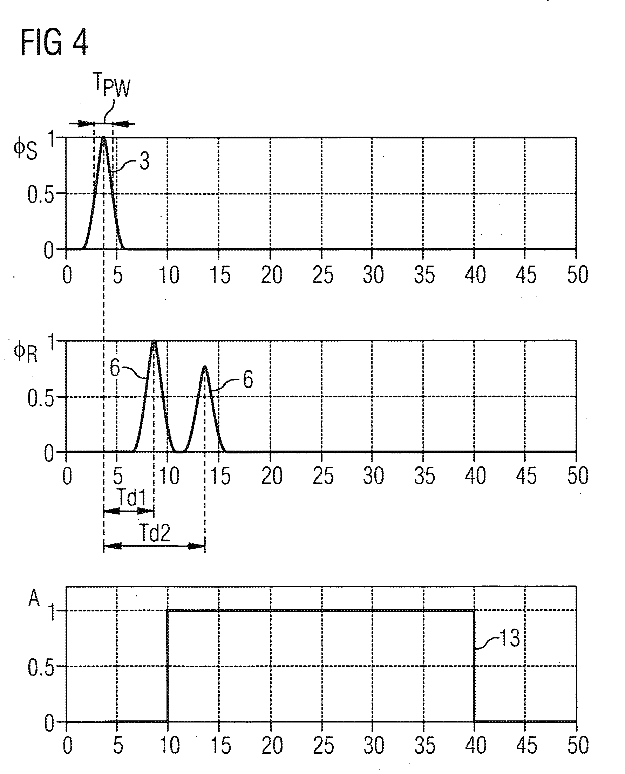

In Figur 4 ist die Situation bei der Verzögerungszeit T_{V7} dargestellt. In diesem Fall ist der Zeitabstand zwischen dem ausgesandten Lichtpuls 3 und dem Integrationsfenster 13 weiter verkürzt worden. Infolgedessen erfasst das Integrationsfenstern 13 nicht nur den am Hintergrundobjekt 5 zurückgeworfenen Lichtpuls 6, sondern zumindest teilweise auch den am Vordergrundobjekt 4 zurückgeworfenen Lichtpuls 6.

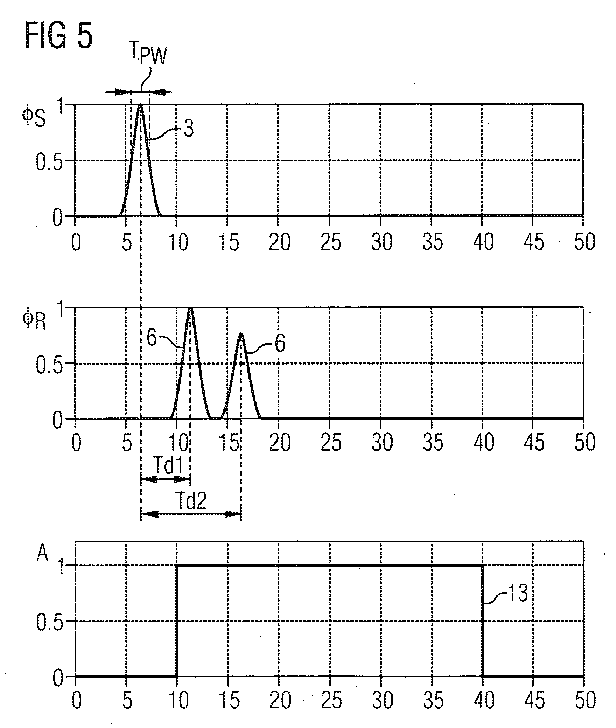

In Figur 5 sind die Verhältnisse bei der Verzögerungszeit T_{V9} dargestellt. Der Zeitabstand zwischen dem ausgesandten Lichtpuls 3 und dem Integrationsfenster 13 ist nunmehr so gering, dass beide zurückgeworfenen Lichtpulse 6 innerhalb des Integrationsfensters 13 liegen und erfasst werden.

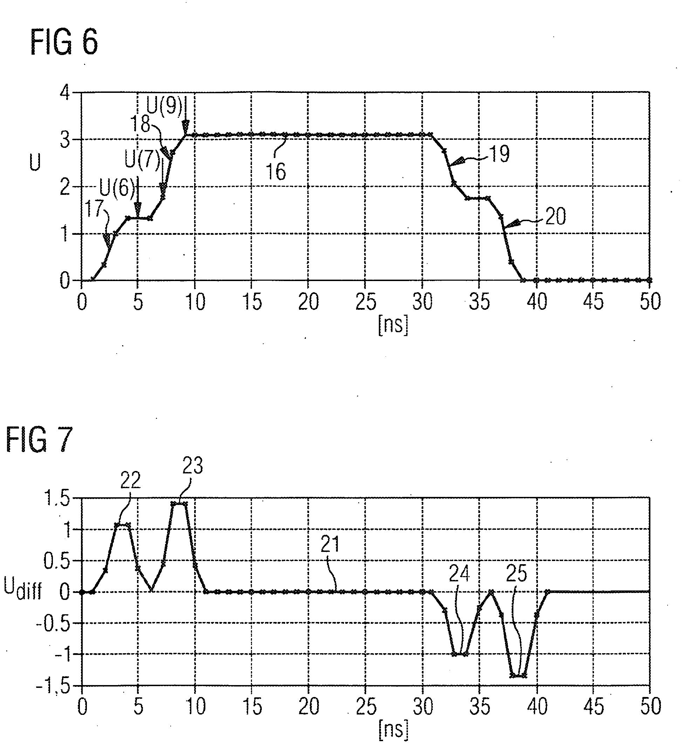

Figur 6 zeigt die bei der Auflösung der einzelnen zurückgeworfenen Lichtpulse 6 sich ergebenden Korrelationskurve 16. Die Korrelationskurve 16 weist am ansteigenden Ende zwischen 0 und der Verzögerungszeit T_{V5} eine Stufe 17 und zwischen der Verzögerungszeit T_{V5} und der Verzögerungszeit T_{V9} eine weitere Stufe 18 auf. Am abfallenden Ende weist die Korrelationskurve 16 den ansteigenden Stufen 17 und 18 entsprechende abfallende Stufen 19 und 20 auf. Durch Detektion der Umkehrpunkte der Stufen 17 und 18 sowie auch 19 und 20 kann die Lichtlaufzeit der am Vordergrundobjekt 4 und Hintergrundobjekt 5 zurückgeworfenen Lichtpulse 6 bestimmt werden.

Die in Figur 6 dargestellte Korrelationskurve 16 wurde anhand einer Mehrfachszene mit einem Vordergrundobjekt 4 und Hintergrundobjekt 5, die 150 cm voneinander entfernt waren, mit einer Pulsbreite T_{PW} von 2 ns und einer Integrationszeit T_{I} von 30 ns aufgenommen.

Mit einer Pulsdauer von 0,1 ns kann auch noch Entfernungsunterschiede von etwa 1,5 cm aufgelöst werden.

Die Bestimmung der Umkehrpunkte erfolgt vorteilhafterweise anhand einer in Figur 7 dargestellten Differenzkurve 21, bei der die Umkehrpunkte zu lokalen Extremwerten werden, die sich einfacher und sicherer bestimmen lassen als die Umkehrpunkte der Korrelationskurve 16. In der Differenzkurve 21 gemäß Figur 7 sind den ansteigenden Stufen 17 und 18 jeweils lokale Maxima 22 und 23 zugeordnet, während den abfallenden Stufen 19 und 20 in der Differenzkurve 21 jeweils ein Minimum 24 und 25 entspricht. Die Anzahl und der Abstand der Extremwerte der Differenzkurve 21 bestimmen die Anzahl und den Abstand der unterschiedlichen Objektebenen.

Die Differenzkurve 21 wird vorteilhafterweise gebildet, indem die Differenz eines bestimmten Werts der Korrelationskurve mit einem um einen Zeitabstand Δt versetzten Wert der Korrelationskurve 16 berechnet wird. Für den Wert der Differenzkurve 21 gilt dann: U_{DIFF} = U(t)-U(t-Δt) wobei der Zeitabstand Δt vorteilhafterweise gleich der Pulsbreite T_{PW} gewählt wird. Dadurch wird die bei der Berechnung der Differenzkurve 21 typische Anfälligkeit gegenüber Signalstörungen und Signalrauschen reduziert.

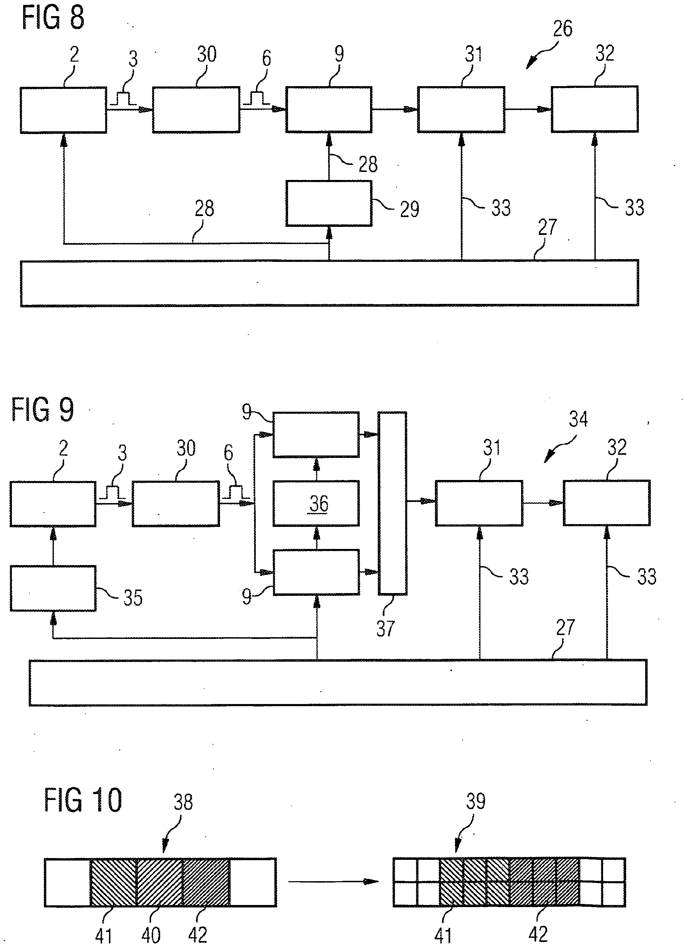

Figur 8 zeigt ein Blockschaltbild einer zum Betrieb der Aufnahmevorrichtung 1 aus Figur 1 vorgesehenen Schaltung 26. Die Schaltung 26 umfasst eine Steuereinheit 27, die die Laserlichtquelle 2 mit einem Auslösesignal 28 beaufschlagt. Das Auslösesignal 28 wird auch durch eine Verzögerungseinheit 29 geschickt und steuert den Lichtsensor 8. Beispielsweise kann die ansteigende Flanke des Auslösesignal 28 dazu verwendet werden, in der Laserlichtquelle 2 einen Lichtpuls 3 auszulösen, der zu einer zu untersuchenden Szene 30 ausgesandt wird dort zurückgeworfen wird und beim Lichtsensor 8 als zurückgeworfener Lichtpuls 6 ankommt. Während das Auslösesignal 28 einen hohen Pegel einnimmt, bleibt der Lichtsensor 8 aktiviert. Die in den einzelnen Sensorelementen 9 erzeugte Ladungsmenge wird ausgelesen, digitalisiert und in einem Zwischenspeicher 31 gespeichert. Eine dem Zwischenspeicher 31 nachgeschaltete Auswerteeinheit 32 berechnet dann anhand der im Zwischenspeicher 31 gespeicherten Korrelationskurve 16 die Differenzkurve 21. Aus der Differenzkurve 21 kann die Auswerteeinheit 32 denn die Zahl und den Abstand der Bildebenen bestimmen.

Gemäß Figur 8 werden der Zwischenspeicher 31 und die Auswerteeinheit 32 ebenfalls mit Steuersignalen 33 aus der Steuereinheit 27 beaufschlagt.

Figur 9 zeigt ein Blockschaltbild einer weiteren Schaltung 34, die für die Aufnahmevorrichtung 1 verwendet werden kann.

Das von der Steuereinheit 27 der Schaltung 34 erzeugte Auslösesignal 28 wird bei der Schaltung 34 auf dem Weg zur Laserlichtquelle 2 über eine Verzögerungseinheit 35 geführt. Dies ist ohne weiteres möglich, da es letztlich nur darauf ankommt, dass' der Zeitabstand zwischen dem Aussenden der Lichtpulse 3 durch die Laserlichtquelle 2 und dem Integrationsfenster 13 variiert werden kann. Das Auslösesignal 28 beaufschlagt die Sensorelemente 9, wobei Paare von benachbarten Sensorelementen 9 aufgrund einer Verzögerung des Auslösesignal 28 in einer Verzögerungseinheit 36 mit zeitlich versetzten Integrationsfenstern 13 arbeiten. Demzufolge ist es möglich, bereits beim Auslösen der Sensorelemente 9 in einer Differenzbildungseinheit 37 die Werte der Differenzkurve 21 zu berechnen und im Zwischenspeicher 31 abzüspeichern. Die Auswerteeinheit 32 kann dann anhand der Lage und der Anzahl der lokalen Extremwerte die Anzahl und den Abstand der Objektebenen bestimmen.

Durch die parallele Erfassung in den Sensorelementen 9 wird in beiden Integrationsfenstern 13 immer derselbe Lichtpuls 6 aufintegriert. Dadurch erhöht sich die Messgenauigkeit, da das für in CMOS-Technik gefertigte Lichtsensoren 8 typische Reset-Rauschen weitgehend eliminiert wird. Außerdem hat die Variation der Pulsdauer T_{PW} der Lichtpulse 3 keinen Einfluss auf die Werte der Differenzkurve 21.

Es sei darauf hingewiesen, dass die Aufnahmevorrichtung 1 auch dazu in der Lage ist, Verschmutzungen und Nässe auf der optischen Einrichtung zu detektieren. Vorteilhafterweise wird hierzu vor die Laserlichtquelle 2 und die Kamera 7 ein Schutzglas montiert, durch das sowohl das Licht der emittierten Lichtpulse 3 als auch die von der Szene 30 zurückgeworfenen Lichtpulse 6 hindurchtreten. Schmutz oder Nässe auf der Außenseite des Schutzglases führt dazu, dass ein Teil des ausgesandten Lichtpulses 3 in Richtung auf die Kamera 7 zurückgeworfen wird. Der andere Teil des ausgesandten Lichtpulses gelangt jedoch zur Szene 30 und wird von der Szene 30 zurückgeworfen. Die zeitlich hintereinander eintreffenden Lichtpulse 6 können anhand der Korrelationskurve 16 detektiert werden. Damit ist es möglich, frühzeitig auf eine Verschmutzung oder eine Benetzung der optischen Einrichtung zu reagieren, indem zum Beispiel eine Reinigungsvorrichtung aktiviert wird. Eine derartige Reinigungsvorrichtung kann zum Beispiel ein Scheibenwischer oder eine Blasvorrichtung sein, durch die die Funktion der Aufnahmevorrichtung 1 auch unter widrigen Umgebungsbedingungen aufrechterhalten werden kann.

Ferner ist es mit der Aufnahmevorrichtung 1 möglich, eine laterale räumliche Auflösung zu erzielen, die nicht durch die seitliche Ausdehnung der Sensorelemente 9 beschränkt ist. Üblicherweise können Strukturen der zu untersuchenden Szene 30, deren Abbildung auf den Lichtsensor 8 die Größe eine Sensorelementes 9 unterschreitet, nicht erkannt werden. Durch die Auflösung des Abstands auf Grund der Mehrzielfähigkeit der Aufnahmevorrichtung 1 kann jedoch ein Abstandsbild mit erhöhter Auflösung erzeugt werden.

Wenn die zu untersuchende Szene 30 unbekannt ist, werden zum Erzeugen des Abstandsbildes erhöhter Auflösung die Abstandswerte der benachbarten Sensorelemente 9 herangezogen. So kann gemäß Figur 10 ein Abstandsbild 38 mit niedriger Auflösung in ein Abstandsbild 39 mit erhöhter Auflösung umgewandelt werden, indem Bildelemente 40, die Mehrfachziele mit mehreren Objektebenen wiedergeben und denen deshalb kein eindeutiger Abstandswert zugeordnet werden kann, aufgeteilt werden und indem den Teilbereichen entsprechende Abstandswerte von benachbarten Bildelementen 41 zugeteilt werden.

Bei einer abgewandelten Ausführungsform wird das Abstandsbild durch Anpassung an das bekannte Modell erzeugt. Dies ist insbesondere bei Überwachungsaufgaben von Vorteil, wenn bekannte sich bewegende Objekte im dreidimensionalen Raum detektiert werden sollen und die zu detektierenden Objekte durch andere Strukturen teilweise verdeckt sind. Die zu überwachenden Objekte können trotz einer teilweisen Verdeckung durch die mehrzielfähige Aufnahmevorrichtung 1 detektiert werden. Denn über das Modellwissen kann der Abstandswert vom eigentlichen Objekt einem Bildelement zugeordnet werden.

Derartige Überwachungsaufgaben stellen beispielsweise das Erkennen, dass Zählen und das Verfolgen von Personen und Fahrzeugen dar. Auch die Bahnsteigüberwachung kann eine derartige Überwachungsaufgabe darstellen.

## Patentansprüche

1. Vorrichtung zur Aufnahme von Abstandsbildern mit einer Lichtpulse (3) aussendenden Lichtquelle (2) und einem Lichtsensor (8) mit einer Vielzahl von Sensorelementen (9), die an einem räumlich ausgedehnten Objektbereich (4, 5) zurückgeworfene Lichtpulse (6) über Zeitfenster (13), deren Zeitabstand zum Aussendevorgang der Lichtpulse (3) variierbar ist, empfangen, und mit einer den Sensorelementen (9) nachgeschalteten Auswerteeinheit (32), der die Bildung einer Korrelationsfunktion (14, 16) aus dem am jeweiligen Sensorelement bei verschiedenen Zeitfenster empfangenen Licht zur Ermittlung von Abstandswerten von Objektbereichen (4, 5) dient, **dadurch gekennzeichnet, dass** die Auswerteeinheit (32) Extremwerte der Steigung (22 bis 25) in der Korrelationsfunktion (16) bestimmt, woraus sich die Abstände von mehreren unterschiedlich entfernten Objektbereichen (4, 5) ergeben, und die Auswerteeinheit (32) Bildelemente (40), die mehrere unterschiedlich beabstandete Objektbereiche (4, 5) abbilden, aufteilt und die Teilbereiche den benachbarten Bildelementen (41, 42) entsprechend deren Abstandswerten zuordnet.

2. Vorrichtung nach Anspruch 1, wobei die Dauer der ausgesandten Lichtpulse (3) kleiner gleich der Zeit ist, die Licht für das Zurücklegen eines aufzulösenden Abstandsunterschieds benötigt.

3. Vorrichtung nach Anspruch 1 oder 2, wobei der Zeitabstand zwischen dem Aussendevorgang des Lichtpulses (3) und dem Zeitfenster (13) um Zeitspannen variierbar ist, die kleiner als die Halbwertsdauer der ausgesandten Lichtpulse (3) sind.

4. Vorrichtung nach einem der Ansprüche 1 bis 3, wobei die Auswerteeinheit (32) die Lage der Extremwerte der Steigung anhand der Ableitung (21) der Korrelationsfunktion (16) bestimmt.

5. Vorrichtung nach Anspruch 4, wobei die Ableitung (21) die Differenzen zwischen einen bestimmten Wert der Korrelationsfunktion (16) und einem benachbarten Wert der Korrelationsfunktion (16) enthält.

6. Vorrichtung nach Anspruch 5, wobei der Zeitabstand zwischen dem bestimmten Wert und dem benachbarten Wert der Korrelationsfunktion (16) kleiner der doppelten Halbwertsdauer der ausgesandten Lichtpulse (3) ist.

7. Vorrichtung nach Anspruch 5 oder 6, wobei der Zeitabstand zwischen dem bestimmten Wert und dem benachbarten Wert der Korrelationsfunktion (16) größer gleich der halben Halbwertsdauer der ausgesandten Lichtpulse (3) ist.

8. Vorrichtung nach einen der Ansprüche 1 bis 7, wobei die Vorrichtung einen Zwischenspeicher (31) aufweist, in den die Werte der Korrelationsfunktion (16) für die Bearbeitung durch die Auswerteeinheit (32) ablegbar sind.

9. Vorrichtung nach einen der Ansprüche 1 bis 8, wobei benachbarte Sensorelenente (9) paarweise jeweils versetzte Zeitfenster (13) aufweisen und eine dem jeweiligen Paar benachbarter Sensorelemente (9) nachgeschaltete Differenzbildungseinheit (37) die Werte der Ableitung (21) bestimmt.

10. Verfahren zur Aufnahme von Abstandsbildern, bei dem mit Hilfe einer Lichtpulse (3) aussendenden Lichtquelle (2) und einem Lichtsensor (8) mit einer Vielzahl von Sensorelementen (9) an einem räumlich ausgedehnten Objektbereich (4, 5) zurückgeworfene Lichtpulse (6) über Zeitfenster (13), deren Zeitabstand zum Aussendevorgang der Lichtpulse (3) variierbar ist, empfangen werden, und eine Korrelationsfunktion (14, 16) aus dem am jeweiligen Sensorelement bei verschiedenen Zeitfenster empfangenen Licht zur Ermittlung von Abstandswerten von Objektbereichen (4, 5) gebildet wird, **dadurch gekennzeichnet, dass** die Abstände von unterschiedlich entfernten Objektbereichen (4, 5) anhand von Extremwerten der Steigung der Korrelationsfunktion (16) bestimmt werden, und Bildelemente (40), die mehrere unterschiedlich beabstandete Objektbereiche (4, 5) abbilden, aufgeteilt werden und die Teilbereiche den benachbarten Bildelementen (41, 42) entsprechend deren Abstandswerten zugeordnet werden.

11. Verfahren nach Anspruch 10, wobei die Extremwerte der Steigung der Korrelationsfunktion (16) anhand von Extremwerten einer von der Korrelationsfunktion (16) abgeleiteten Differenzfunktion (21) bestimmt werden.

## Claims

1. Device for acquiring distance images with a light source (2) emitting light pulses (3) and a light sensor (8) with a plurality of sensor elements (9), which receives light pulses (6) backreflected from a spatially extended object area (4, 5) within time gates (13), which time difference to the emission process of the light pulses (3) can be varied, and with a processing unit (32) downstream from the sensor elements (9), wherein the processing unit (32) acts for forming a correlation function (14, 16) by means of the light received at the respective sensor element at different time gates for determining distance values of object areas (4, 5), **characterised in that** the processing unit (32) determines extreme values of the slope (22 to 25) of the correlation function (16) from what the distances of multiple differently distant object areas (4, 5) result, and the processing unit (32) divides picture elements (40) imaging multiple differently distant object areas (4, 5) and assigns the partial areas to the adjacent picture elements (41, 42) according to their distance values.

2. Device according to claim 1, wherein the duration of the emitted light pulses (3) is shorter than or equal to the time, which light takes for travelling a distance difference to be resolved.

3. Device according to claim 1 or 2, wherein the time difference between the emission process of the light pulse (3) and the time gate (13) can be varied by time intervals, which are shorter than the full duration half maximum of the emitted light pulses (3).

4. Device according to anyone of claims 1 to 3, wherein the processing unit (32) determines the location of the extreme values of the slope by means of the derivative (21) of the correlation function.

5. Device according to claim 4, wherein the derivative (21) comprises the differences between a certain value of the correlation function (16) and an adjacent value of the correlation function (16).

6. Device according to claim 5, wherein the time difference between the certain value and the adjacent value of the correlation function (16) is shorter than twice the full duration half maximum of the emitted light pulses (3).

7. Device according to claim 5 or 6, wherein the time difference between the certain value and the adjacent value of the correlation function (16) is longer than or equal to half the full duration half maximum of the emitted light pulses (3).

8. Device according to anyone of claims 1 to 7, wherein the device comprises a buffer memory (31), in which the values of the correlation function (16) can be stored for processing by the processing unit (32).

9. Device according to anyone of the claims 1 to 8, wherein adjacent sensor elements (9) comprise pairwise respectively shifted time gates (13) and a difference forming unit (37) downstream of the respective pair of neighboured sensor elements (9) for calculating the values of the derivative (21).

10. Method for acquiring distance images, at which by means of a light source (2) emitting light pulses (3) and a light sensor (8) with a plurality of sensor elements (9) light pulses (6) backreflected from a spatially extended object area (4, 5) are received within time gates (13), which time difference to the emission process of the light pulses (3) can be varied, and a correlation function (14, 16) is formed by means of the received light measured at the respective sensor element at different time gates for determining distance values of object areas (4, 5), **characterised in that** the distances of differently distant object areas (4, 5) are determined by means of extreme values of the slope of the correlation function (16), and the picture elements (40) imaging multiple differently distant object areas (4, 5) are divided and the partial areas are assigned to the adjacent picture elements (41, 42) according to their distance values.

11. Method according to claim 10, wherein the extreme values of the slope of the correlation function (16) are determined by means of extreme values of a difference function (21) derived from the correlation function (16).

## Revendications

1. Dispositif destiné à enregistrer des images d'espacement comprenant une source de lumière (2) émettant des impulsions de lumière (3) et un capteur de lumière (8) doté d'une pluralité d'éléments capteurs (9), qui reçoivent des impulsions de lumière (6) renvoyées sur une zone d'objet (4, 5) étendue dans l'espace au moyen de fenêtres temporelles (13), dont l'espacement dans le temps par rapport à l'opération d'émission des impulsions de lumière (3) peut être modifié, et d'une unité d'analyse (32) montée en aval des éléments capteurs (9), unité à laquelle sert la formation d'une fonction de corrélation (14, 16) à partir de la lumière reçue sur l'élément capteur concerné dans différentes fenêtres temporelles pour déterminer des valeurs d'espacement par rapport à des zones d'objet (4, 5), **caractérisé en ce que** l'unité d'analyse (32) détermine des valeurs extrêmes de la pente (22 à 25) dans la fonction de corrélation (16), fonction de laquelle résultent les espacements de plusieurs zones d'objet (4, 5) éloignées différemment, et l'unité d'analyse (32) divise des éléments d'image (40), qui représentent plusieurs zones d'objet (4, 5) espacées différemment, et attribue les zones partielles aux éléments d'image (41, 42) voisins en fonction de leurs valeurs d'espacement.

2. Dispositif selon la revendication 1, la durée des impulsions de lumière (3) émises étant inférieure au temps dont la lumière a besoin pour parcourir une différence d'espacement à résoudre.

3. Dispositif selon la revendication 1 ou 2, l'espace de temps entre l'opération d'émission de l'impulsion lumineuse (3) et la fenêtre temporelle (13) pouvant être modifié de laps de temps qui sont inférieurs à la durée de demi-valeur des impulsions lumineuses (3) émises.

4. Dispositif selon l'une des revendications 1 à 3, l'unité d'analyse (32) déterminant la position des valeurs extrêmes de la pente à l'aide de la dérivée (21) de la fonction de corrélation (16).

5. Dispositif selon la revendication 4, la dérivée (21) contenant les différences entre une valeur définie de la fonction de corrélation (16) et une valeur voisine de la fonction de corrélation (16).

6. Dispositif selon la revendication 5, l'espace de temps entre la valeur définie et la valeur voisine de la fonction de corrélation (16) étant inférieur à la double durée de demi-valeur des impulsions lumineuses (3) émises.

7. Dispositif selon la revendication 5 ou 6, l'espace de temps entre la valeur définie et la valeur voisine de la fonction de corrélation (16) étant supérieur ou égal à la demi-durée de demi-valeur des impulsions lumineuses (3) émises.

8. Dispositif selon l'une des revendications 1 à 7, le dispositif présentant une mémoire intermédiaire (31), dans laquelle les valeurs de la fonction de corrélation (16) pour le traitement par l'unité d'analyse (32) peuvent être déposées.

9. Dispositif selon l'une des revendication 1 à 8, des éléments capteurs (9) voisins présentant des fenêtres temporelles (13) décalées à chaque fois par paires et une unité de formation de différence (37) montée en aval de la paire respective d'éléments capteurs (9) voisins, déterminant les valeurs de la dérivée (21).

10. Procédé destiné à enregistrer des images d'espacement, dans lequel des impulsions lumineuses (6) renvoyées sur une zone d'objet (4, 5) étendue dans l'espace sont reçues à l'aide d'une source de lumière (2) émettant des impulsions lumineuses (3) et avec un capteur de lumière (8) doté d'une pluralité d'éléments capteurs (9) sur des fenêtres temporelles (13), dont l'espacement temporel par rapport à l'opération d'émission des impulsions de lumière (3) peut être modifié, et une fonction de corrélation (14, 16) étant formée à partir de la lumière reçue sur l'élément capteur respectif dans différentes fenêtres temporelles pour déterminer des valeurs d'espacement de zones d'objet (4, 5), **caractérisé en ce que** les espacements à des zones d'objet (4, 5) éloignées différemment sont déterminés à l'aide de valeurs extrêmes de la pente de la fonction de corrélation (16), et des éléments d'image (40), qui représentent plusieurs zones d'objet (4, 5) espacées différemment, sont divisés et les zones partielles sont attribuées aux éléments d'image (41, 42) voisins en fonction de leurs valeurs d'espacement.

11. Procédé selon la revendication 10, les valeurs extrêmes de la pente de la fonction de corrélation (16) étant déterminées à l'aide de valeurs extrêmes d'une fonction de différence (21) déduite de la fonction de corrélation (16).
